# EUROPÄISCHE PATENTANMELDUNG

(11) **EP 1 452 953 A1**
(43) Veröffentlichungstag der Anmeldung: **01.09.2004**
(21) Anmeldenummer: 04100264.3
(22) Anmeldetag: 26.01.2004
(51) Int. Cl.: G06F 3/023, H04M 1/27, H04M 1/725

(54) **Verfahren und Vorrichtung zur Korrektur von gesprochenen Eingaben mittels einer einzigen Taste**

(30) Priorität: 26.02.2003 DE 10308315
(71) Anmelder: SIEMENS AKTIENGESELLSCHAFT, 80333 München (DE)
(72) Erfinder: Frensch, Ewald, 86415 Mering (DE)

(57) **Zusammenfassung**

Bei der Eingabe von gesprochenen Buchstaben wird der gesprochene Laut in einem Erkenner in einem Buchstaben umgewandelt und zu einem Teilwort aneinandergehängt. Das Teilwort wird als Präfix mit einer Datenbank verglichen und das häufigst verwendete Wort, welches mit der Präfix beginnt, wird auf einem Display als Vorschlag ausgegeben. Zur Korrektur steht dem Anwender eine einzige Taste zur Verfügung, mittels dieser die letzte Eingabe korrigiert wird. Beim einmaligen Drücken wird das vorgeschlagene Wort gelöscht, beim nochmaligen Drücken wird der letzte Buchstabe gelöscht. Falls der gewünschte Buchstabe nach einer bestimmten anzahl von Vorschlägen nicht erkannt wurde, so wird dieser Buchstabe gelöscht und muß vom Anwender neu eingegeben werden.

## Beschreibung

Die Erkennungsrate beim Buchstabieren beträgt bei modernen Spracherkennern ca. 80%. Es ist somit unerlässlich, dem Benutzer eine elegante Möglichkeit zur Korrektur falscher Buchstaben zu bieten. Es bieten sich verschiedene Möglichkeiten, diese Korrektur durchzuführen, die jedoch zuverlässige Eingabekanäle erfordern, wie beispielsweise Tasten bei Mobiltelefongeräten. Das Problem bei der Integration der einzelnen Korrekturmechanismen besteht nun im Wesentlichen darin, dass man bei Geräten der nächsten Generation aus Platzgründen oder aber auch aus technologischen Gründen nur eine sehr begrenzte Anzahl von Eingabemöglichkeiten zur Verfügung hat, weil die Anzahl der Tasten auf immer kleiner werdenden mobilen Endgeräten immer geringer wird.

Da die Spracherkennung eine relativ neue Eigenschaft von Kleinstgeräten ist, sind für diese Kleinstgeräte nur sehr begrenzte Korrekturmöglichkeiten bei der Spracheingabe bekannt. Bei bestehenden Geräten mit Spracherkennungseingabe, beispielsweise Namenswahl, beschränken sich die Korrekturhilfen auf das Löschen der letzten Eingabe.

Davon ausgehend liegt der Erfindung die Aufgabe zugrunde, dem Benutzer ein einfaches, aber dennoch sehr leistungsfähiges Verfahren zur Verfügung zu stellen, mit dessen Hilfe er Fehlerkennungen effektiv korrigieren kann.

Diese Aufgabe wird durch die in den unabhängigen Ansprüchen angegebenen Erfindungen gelöst. Vorteilhafte Ausgestaltungen ergeben sich aus den abhängigen Ansprüchen.

Dementsprechend wird von einem Benutzer eine Lauteinheit, insbesondere ein Buchstabe, in eine Vorrichtung eingegeben, die insbesondere ein Kleinstgerät mit wenigen Tasten ist. Sodann wird der eingegebenen Lauteinheit von einem Erkenner eine falsch oder richtig erkannte Lauteinheit zugeordnet. Die erkannte Lauteinheit wird mit zuvor eingegebenen und dadurch erkannten Lauteinheiten zu einer Folge von erkannten Lauteinheiten zusammengefasst. Die Folge von erkannten Lauteinheiten wird danach aus einer Datenbank, insbesondere einem Lexikon und/oder einem Wörterbuch, zu einer mit der Folge von Lauteinheiten beginnenden Lauteinheitenstruktur ergänzt. Die Lauteinheitenstruktur wird nun ausgegeben, indem sie dem Benutzer beispielsweise auf einer Anzeige angezeigt wird. Nunmehr kann der Benutzer eingeben, ob eine Fehlergänzung vorliegt. Wenn er dies tut, wird die Ergänzung, also der in der Lauteinheitenstruktur über die Folge von erkannten Lauteinheiten hinausgehender Bestandteil, gelöscht. Die nach dem Löschen der Ergänzung verbleibende Folge von erkannten Lauteinheiten kann dann wiederum ausgegeben werden.

Vorzugsweise wird nach dem Schritt, bei dem der eingegebenen Lauteinheit eine erkannte Lauteinheit zugeordnet wird, die erkannte Lauteinheit ausgegeben. So kann der Benutzer eingeben, ob eine Fehlerkennung vorliegt, woraufhin der eingegebenen Lauteinheit eine neue falsch oder richtig erkannte Lauteinheit zugeordnet wird, sofern der eingegebenen Lauteinheit im Verfahren bislang weniger als m mal die erkannte Lauteinheit zugeordnet worden ist.

Alternativ zur im letzten Absatz genannten vorteilhaften Ausgestaltung kann allerdings auch nach dem Schritt, bei dem die erkannte Lauteinheit mit zuvor erkannten Lauteinheiten zu einer Folge von erkannten Lauteinheiten zusammengefasst wird, die Folge von erkannten Lauteinheiten ausgegeben werden. Dies hat den Vorteil, dass der Benutzer nicht nur die zuletzt erkannte Lauteinheit sehen kann, sondern auch die zuvor bereits erkannten. Er kann nun wiederum eingeben, ob eine Fehlerkennung vorliegt. Für den Fall einer solchen Eingabe wird der eingegebenen Lauteinheit auch bei dieser Alternative eine neue erkannte Lauteinheit zugeordnet, sofern der eingegebenen Lauteinheit weniger als m mal eine erkannte Lauteinheit zugeordnet worden ist.

Wenn dagegen der eingegebenen Lauteinheit m mal oder öfter als m mal eine erkannte Lauteinheit zugeordnet worden ist, wird der Benutzer aufgefordert, die Lauteinheit erneut einzugeben, also einzusprechen.

Der Wert von m sollte so gewählt werden, dass der Benutzer die Lauteinheit nicht ständig neu einsprechen muss, aber andererseits bei einer schlechten ersten Aussprache der Lauteinheit auch nicht durch das Vorschlagen einer Vielzahl von falschen Hypothesen zur Verzweiflung getrieben wird, bevor er die Lauteinheit erneut eingeben kann. In der Praxis hat sich ein Wert von m=3 als besonders sinnvoll herausgestellt, wobei je nach Erkennungsrate auch andere Werte sinnvoll sind, die kleiner als 6 oder kleiner als 10 sind.

Eine weitere, sehr sinnvolle Ausprägung erfährt das Verfahren, wenn nach dem Schritt, bei dem eingebbar ist, dass eine Fehlergänzung vorliegt, und wenn eingegeben wird, dass eine Fehlergänzung vorliegt, die Ergänzung gelöscht wird, die Folge von erkannten Lauteinheiten ausgegeben wird und sodann eingebbar ist, dass ein Fehler vorliegt, also die Folge von erkannten Lauteinheiten in der letzten erkannten Lauteinheit fehlerhaft ist. Wird nun eingegeben, dass ein Fehler vorliegt, so wird der eingegebenen Lauteinheit eine neue erkannte Lauteinheit zugeordnet, sofern der eingegebenen Lauteinheit weniger als n mal eine erkannte Lauteinheit zugeordnet worden ist.

Wird dagegen nicht eingegeben, dass ein Fehler vorliegt, so wird der Benutzer aufgefordert, die Lauteinheit erneut einzugeben.

Das gleiche gilt, sofern der eingegebenen Lauteinheit bereits n mal oder öfter als n mal eine erkannte Lauteinheit zugeordnet worden ist.

Der Wert von n sollte nach den gleichen Kriterien wie der Wert von m bestimmt werden.

Um den Benutzer nicht unnötig zu verwirren, kann der gleiche Wert für m wie für n gewählt werden.

Die Lauteinheit ist insbesondere ein Buchstabe und die Lauteinheitenstruktur ein Wort. Für Sprachen mit Silben- und Zeichenalphabeten kann die Lauteinheit aber auch eine einer Silbe bzw. einem Zeichen entsprechende Lauteinheit sein.

Vorzugsweise ist die Lauteinheitenstruktur, zu der die Folge von Lauteinheiten ergänzt wird, die am häufigsten in der jeweils benutzten oder eingestellten Sprache auftretende Lauteinheitenstruktur, die mit dieser Folge von Lauteinheiten beginnt.

Eine Vorrichtung, die eingerichtet ist, das Verfahren auszuführen, ist insbesondere ein Kleinstgerät und/oder ein mobiles Endgerät wie beispielsweise ein Mobiltelefon oder PDA mit wenigen Tasten, insbesondere weniger als 24 Tasten. Die Vorrichtung weist vorzugsweise Mittel zum Umwandeln von Schallsignalen, einen Erkenner, Mittel zum Zuordnen, Mittel zum Zusammenfassen, Mittel zum Ergänzen, Mittel zum Ausgeben, insbesondere in Form einer Anzeige, und Mittel zum Eingeben auf. Auch für weitere Verfahrensschritte können jeweils Mittel oder Elemente vorgesehen bzw. eingerichtet sein.

Insbesondere ist die Vorrichtung so eingerichtet, dass mittels derselben Taste eingebbar ist, dass eine Fehlerkennung, Fehlergänzung und/oder ein Fehler vorliegt.

Ein Programmprodukt für eine Datenverarbeitungsanlage, das Codeabschnitte enthält, mit denen eines der geschilderten Verfahren auf der Datenverarbeitungsanlage ausgeführt werden kann, lässt sich durch geeignete Implementierung des Verfahrens in einer Programmiersprache und Übersetzung in von der Datenverarbeitungsanlage ausführbaren Code ausführen. Die Codeabschnitte werden dazu gespeichert. Dabei wird unter einem Programmprodukt das Programm als handelbares Produkt verstanden. Es kann in beliebiger Form vorliegen, so zum Beispiel auf Papier, einem computerlesbaren Datenträger oder über ein Netz verteilt.

Weitere wesentliche Vorteile und Merkmale der Erfindung ergeben sich aus der Beschreibung eines Ausführungsbeispiels anhand der Zeichnung. Dabei zeigt:
- Figur 1: ein Ablaufdiagramm eines Verfahrens zur Spracherkennung;
- Figur 2: eine Erkennung des Wortes "halten";
- Figur 3: eine Erkennung des Wortes "amerika".

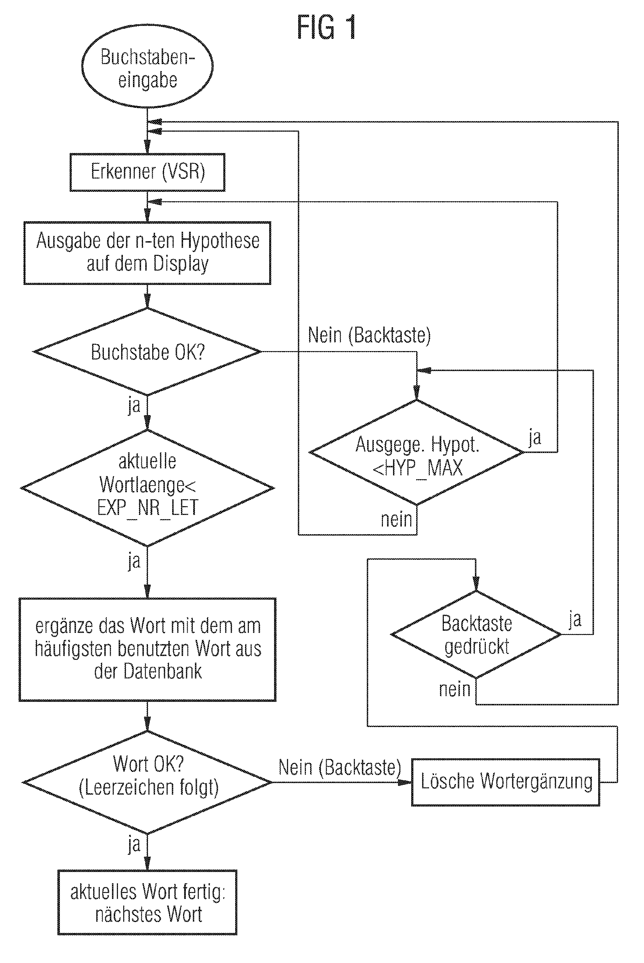

In Figur 1 erkennt man wie über eine Buchstabeneingabe eine eingesprochene Lauteinheit in Form eines Buchstabens einem Erkenner (VSR) zugeführt wird. Der Erkenner ordnet der eingegebenen Lauteinheit mit absteigender Wahrscheinlichkeit mehrere erkannte Lauteinheiten zu, die der eingegebenen Lauteinheit entsprechen können.

Zunächst wird diejenige erkannte Lauteinheit auf einem Display ausgegeben, die mit der höchsten Wahrscheinlichkeit der eingegebenen Lauteinheit entspricht. Der Benutzer kann nun beurteilen, ob die erkannte Lauteinheit wirklich die eingegebene Lauteinheit ist.

Ist dies nicht der Fall, so gibt der Benutzer ein, dass eine Fehlerkennung vorliegt, indem er eine Taste drückt, insbesondere die Back-Taste (Zurück-Taste, ←).

Daraufhin wird verglichen, ob der eingegebenen Lauteinheit weniger als m mal eine erkannte Lauteinheit zugeordnet worden ist, also, ob die Anzahl der ausgegebenen Hypothesen kleiner als m, die Anzahl HYP_MAX der maximalen Hypothesen, ist. Wird diese Frage mit "Ja" beantwortet, so wird der eingegebenen Lauteinheit eine neue erkannte Lauteinheit zugeordnet und auf dem Display ausgegeben. Im gerade genannten Fall ist die neue erkannte Lauteinheit die erkannte Lauteinheit, für die der Erkenner bestimmt hat, dass sie am zweitwahrscheinlichsten der eingegebenen Lauteinheit entspricht.

Sofern dagegen der eingegebenen Lauteinheit bereits m mal eine erkannte Lauteinheit zugeordnet worden ist, wird der Benutzer aufgefordert, die Lauteinheit erneut einzugeben.

Entspricht die erkannte Lauteinheit der eingegebenen Lauteinheit, so wird sie mit zuvor erkannten Lauteinheiten zu einer Folge von erkannten Lauteinheiten zusammengefasst. Wenn die Folge von erkannten Lauteinheiten, also die aktuelle Wortlänge, kleiner als ein Wert EXP_NR_LET ist, dann wird sie aus einer Datenbank, insbesondere einem Lexikon oder einem Wörterbuch, zu einer dort verzeichneten Lauteinheitenstruktur ergänzt, insbesondere also zu einem vollständigen Wort.

Der Benutzer kann nun, beispielsweise durch Eingabe eines Leerzeichens, bestätigen, dass die im Verfahren gefundene Lauteinheitenstruktur das Wort ist, das er eingeben wollte.

Ist dies nicht der Fall, so gibt der Benutzer ein, dass eine Fehlergänzung vorliegt, indem er die Back-Taste drückt. Daraufhin wird die Wortergänzung gelöscht und nur noch die Folge von erkannten Lauteinheiten angezeigt.

Stellt der Benutzer nun fest, dass bei der Folge von erkannten Lauteinheiten ein Fehler vorliegt, in dem insbesondere die letzte Lauteinheit falsch erkannt worden ist, so gibt er ein, dass ein Fehler vorliegt, indem er die Back-Taste erneut drückt. Daraufhin wird er aufgefordert, die Lauteinheit erneut einzugeben.

Gibt der Benutzer hingegen nicht ein, dass ein Fehler vorliegt, so wird überprüft, ob die Anzahl der ausgegebenen Hypothesen kleiner als HYP_MAX ist, also ob der eingegebenen Lauteinheit weniger n mal eine erkannte Lauteinheit zugeordnet worden ist. Im dargestellten Ausführungsbeispiel ist n = m = HYP_MAX.

Sofern der eingegebenen Lauteinheit weniger als n mal eine erkannte Lauteinheit zugeordnet worden ist, wird der eingegebenen Lauteinheit eine neue erkannte Lauteinheit zugeordnet, die mit einer geringeren Wahrscheinlichkeit als die zuerst zugeordnete Lauteinheit der eingegebenen Lauteinheit entspricht.

Ist dagegen der eingegebenen Lauteinheit bereits n mal eine erkannte Lauteinheit zugeordnet worden, so wird der Benutzer aufgefordert, die Lauteinheit erneut einzugeben.

Wie leicht zu erkennen ist, benötigt man nur eine Taste, um die Korrektur/Eingabe durchzuführen. Die Vorgehensweise ist auch selbsterklärend, da sie der üblichen Bedienerwartung des Benutzers entspricht: Die letzte Aktion wird im Fehlerfall rückgängig gemacht, unabhängig davon, ob sie vom Benutzer oder von der Maschine durchgeführt wurde. Ein für den Benutzer unübersichtliches "Swappen" zwischen Worten beim Rücknehmen der automatischen Wortergänzung erfolgt nicht, da der Algorithmus nach der Rücknahme des Wortes auf eine weitere Buchstabeneingabe wartet, bevor er den Ergänzungsmechanismus neu startet.

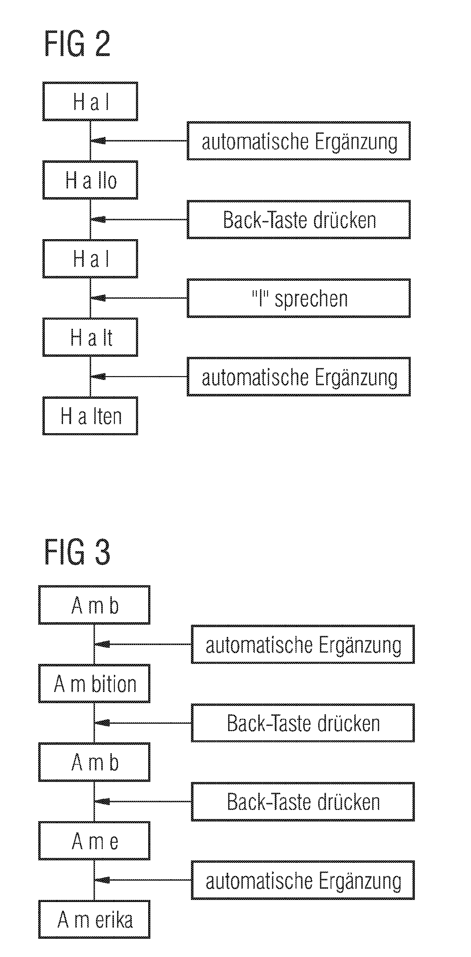

Mit Bezug auf Figur 2 wird nun angenommen, dass das Wort "Halten" eingegeben werden soll. Im ersten Schritt werden die Buchstaben "H a 1 " buchstabiert. Diese Buchstaben wurden richtig erkannt. Der Algorithmus sucht nun in seiner Datenbank das am häufigsten benutzte Wort mit diesem Präfix. Er findet "Hallo". Da dies nicht dem gewünschten Wort entspricht, drückt der Benutzer die Back-Taste. Die Ergänzung wird gelöscht und es bleibt "Hal" übrig. Falls der Benutzer nun ein "t" spricht, wird das Präfix zu "Halten" ergänzt und das gewünschte Wort angezeigt.

Mit Bezug auf Figur 2 soll nun angenommen werden, dass das Wort "Amerika" eingegeben werden soll. Betrachtet wird nun der Fall, dass der zuletzt gesprochene, dritte Buchstabe "e" falsch erkannt wurde. Der Spracherkenner hat fälschlicherweise ein "b" erkannt. In diesem Fall wird das Präfix "Amb" zu "Ambition" ergänzt. Nach erstmaligem Drücken der Back-Taste wird die Ergänzung (Erweiterung) gelöscht. Das zweite Drücken der Back-Taste ersetzt das fälschlicherweise erkannte "b" durch die zweitbeste Hypothese. Angenommen, die zweitbeste Hypothese ist bereits das gesuchte "e". In diesem Fall ergänzt der Algorithmus auf das gesuchte Wort. Falls die zweitbeste Hypothese ebenfalls falsch ist, wird nach erneutem Drücken der Back-Taste die drittbeste Hypothese ausgegeben usw.

Falls der gewünschte Buchstabe nach einer bestimmten Anzahl von Hypothesen nicht erkannt wurde, wird der Buchstabe vollkommen gelöscht und der Benutzer muss ihn neu sprechen. Als brauchbarer Wert für die maximale Anzahl von Hypothesen haben sich bei Tests drei Hypothesen ergeben. Bei dieser Anzahl ist die Wahrscheinlichkeit, dass der Benutzer einen Buchstaben zweimal sprechen muss, sehr gering.

## Patentansprüche

1. Verfahren zur Spracherkennung,
- bei dem eine Lauteinheit eingegeben wird,
- bei dem der eingegebenen Lauteinheit eine erkannte Lauteinheit zugeordnet wird,
- bei dem die erkannte Lauteinheit mit zuvor erkannten Lauteinheiten zu einer Folge von erkannten Lauteinheiten zusammengefasst wird,
- bei der die Folge von erkannten Lauteinheiten aus einer Datenbank zu einer mit der Folge von Lauteinheiten beginnenden Lauteinheitenstruktur ergänzt wird,
- bei dem die Lauteinheitenstruktur ausgegeben wird,
- bei dem eingebbar ist, dass eine Fehlergänzung vorliegt, und wenn eingegeben wird, dass eine Fehlergänzung vorliegt, die Ergänzung gelöscht wird.

2. Verfahren nach Anspruch 1,
- bei dem nach dem Schritt, bei dem der eingegebenen Lauteinheit eine erkannte Lauteinheit zugeordnet wird, die erkannte Lauteinheit ausgegeben wird,
- bei dem eingebbar ist, dass eine Fehlerkennung vorliegt, und wenn eingegeben wird, dass eine Fehlerkennung vorliegt, der eingegebenen Lauteinheit eine neue erkannte Lauteinheit zugeordnet wird, sofern der eingegebenen Lauteinheit weniger als m mal eine erkannte Lauteinheit zugeordnet worden ist.

3. Verfahren nach Anspruch 1,
- bei dem nach dem Schritt, bei dem die erkannte Lauteinheit mit zuvor erkannten Lauteinheiten zu einer Folge von erkannten Lauteinheiten zusammengefasst wird, die Folge von erkannten Lauteinheiten ausgegeben wird,
- bei dem eingebbar ist, dass eine Fehlerkennung vorliegt, und wenn eingegeben wird, dass eine Fehlerkennung vorliegt, der eingegebenen Lauteinheit eine neue erkannte Lauteinheit zugeordnet wird, sofern der eingegebenen Lauteinheit weniger als m mal eine erkannte Lauteinheit zugeordnet worden ist.

4. Verfahren nach Anspruch 2 oder 3,
- bei dem, sofern der eingegebenen Lauteinheit m mal oder öfter als m mal eine erkannte Lauteinheit zugeordnet worden ist, aufgefordert wird, die Lauteinheit erneut einzugeben.

5. Verfahren nach einem der Ansprüche 2 bis 4,
- bei dem m gleich 3 ist.

6. Verfahren nach einem der vorhergehenden Ansprüche,
- bei dem nach dem Schritt, bei dem eingebbar ist, dass eine Fehlergänzung vorliegt, und wenn eingegeben wird, dass eine Fehlergänzung vorliegt, die Ergänzung gelöscht wird, die Folge von erkannten Lauteinheiten ausgegeben wird,
- bei dem eingebbar ist, dass ein Fehler vorliegt, und wenn eingegeben wird, dass ein Fehler vorliegt, der eingegebenen Lauteinheit eine neue erkannte Lauteinheit zugeordnet wird, sofern der eingegebenen Lauteinheit weniger als n mal eine erkannte Lauteinheit zugeordnet worden ist.

7. Verfahren nach Anspruch 6,
- bei dem, wenn nicht eingegeben wird, dass ein Fehler vorliegt, aufgefordert wird, die Lauteinheit erneut einzugeben.

8. Verfahren nach Anspruch 6 oder 7,
- bei dem, sofern der eingegebenen Lauteinheit n mal oder öfter als n mal eine erkannte Lauteinheit zugeordnet worden ist, aufgefordert wird, die Lauteinheit erneut einzugeben.

9. Verfahren nach einem der Ansprüche 6 bis 8,
- bei dem n gleich 3 ist.

10. Verfahren nach einem der Ansprüche 2 bis 5 und einem der Ansprüche 6 bis 9,
- bei dem m gleich n ist.

11. Verfahren nach einem der vorhergehenden Ansprüche,
- bei dem die Lauteinheit ein Buchstabe ist.

12. Verfahren nach einem der vorhergehenden Ansprüche,
- bei dem die Lauteinheitenstruktur ein Wort ist.

13. Verfahren nach einem der vorhergehenden Ansprüche,
- bei dem die Lauteinheitenstruktur die am häufigsten auftretende Lauteinheitenstruktur ist, die mit der Folge von Lauteinheiten beginnt.

14. Vorrichtung, die eingerichtet ist, ein Verfahren nach einem der vorhergehenden Ansprüche auszuführen.

15. Vorrichtung nach Anspruch 14,
**dadurch gekennzeichnet,**
**dass** sie ein mobiles Endgerät, insbesondere ein Mobiltelefon oder PDA, ist und/oder weniger als 24 Tasten aufweist.

16. Vorrichtung, die eingerichtet ist, ein Verfahren nach einem der Ansprüche 2 bis 5 auszuführen,
**dadurch gekennzeichnet,**
**dass** mittels derselben Taste eingebbar ist, dass eine Fehlerkennung oder dass eine Fehlergänzung vorliegt.

17. Vorrichtung, die eingerichtet ist, ein Verfahren nach einem der Ansprüche 6 bis 9 auszuführen,
**dadurch gekennzeichnet,**
**dass** mittels derselben Taste eingebbar ist, dass ein Fehler oder dass eine Fehlergänzung vorliegt.

18. Vorrichtung, die eingerichtet ist, ein Verfahren nach einem der Ansprüche 2 bis 5 und einem der Ansprüche 6 bis 9 auszuführen,
**dadurch gekennzeichnet,**
**dass** mittels derselben Taste eingebbar ist, dass eine Fehlerkennung, dass eine Fehlergänzung oder dass ein Fehler vorliegt.

19. Programmprodukt, das, wenn es auf eine Datenverarbeitungsanlage geladen und darauf ausgeführt wird, ein Verfahren nach einem der Ansprüche 1 bis 13 oder eine Vorrichtung nach einem der Ansprüche 14 bis 18 in Kraft setzt.
